# EUROPÄISCHE PATENTSCHRIFT

(11) **EP 0 937 897 B1**
(45) Veröffentlichungstag und Bekanntmachung des Hinweises auf die Patenterteilung: **17.11.2004**
(21) Anmeldenummer: 98124183.9
(22) Anmeldetag: 21.12.1998
(51) Int. Cl.: F15B 7/08, B60T 8/40

(54) **Dämpfungsglied für hydraulische Verstelleinrichtungen bei Kraftfahrzeugen**
Damping device for a hydraulic actuating system
Elément amortisseur pour un dispositif de commande hydraulique

(30) Priorität: 24.02.1998 DE 19807446
(43) Veröffentlichungstag der Anmeldung: 25.08.1999
(73) Patentinhaber: ZF Sachs AG, 97424 Schweinfurt (DE)
(72) Erfinder: Ebert, Angelika, 97421 Schweinfurt (DE); Grosspietsch, Wolfgang Dipl.-Ing., 97422 Schweinfurt (DE)

(56) Entgegenhaltungen:
- DD-A- 17 353
- DE-A- 2 355 254
- DE-A- 3 106 344
- DE-A- 4 334 551
- DE-A- 4 435 258
- DE-A- 19 730 030
- DE-C- 19 500 908
- FR-A- 1 316 544
- GB-A- 2 097 898
- US-A- 5 209 553
- PATENT ABSTRACTS OF JAPAN vol. 008, no. 201 (M-325), 14. September 1984 (1984-09-14) & JP 59 089833 A (RIZUMU JIDOUSHIYA BUHIN SEIZOU KK), 24. Mai 1984 (1984-05-24)

## Beschreibung

Die Erfindung betrifft ein Dämpfungsglied zur Dämpfung von Druckpulsationen in einem hydraulischen System zum Betätigen einer Kraftfahrzeugkupplung gemäß dem Oberbegriff des Anspruchs 1.

Ein derartiges Dämpfungsglied ist beispielsweise aus der DE 195 00 908 C1 bekannt. Die dort beschriebene Erfindung hat es sich zur Aufgabe gemacht, ein Dämpfungsglied zu schaffen, mit dem Volumenschwankungen bzw. Druckpulsationen ohne nachteiligen Einfluß auf den Wirkungsgrad oder die Funktion des Hydrauliksystems gedämpft werden können. Bei einem hydraulischen Ausrücksystem für eine Fahrzeugkupplung werden die von der Brennkraftmaschine des Fahrzeuges ausgelösten Axialschwingungen über die Reibungskupplung und deren Membranfeder auf das Kupplungsausrücklager und die damit verbundenen Ausrückeinrichtungen übertragen. Diese Axialschwingungen setzen sich im gesamten hydraulischen Ausrücksystem fort und können ein unangenehmes Kribbeln bei der Berührung des Kupplungspedals auslösen.

In der Figur 6 der DE 195 00 908 C1 wird ein Dämpfungsglied offenbart, welches insgesamt drei hintereinander angeordnete und voneinander beabstandete Scheiben umfasst. Eine rechte und eine linke Scheibe weisen jeweils Zentralöffungen für den Durchtritt eines Hydraulikfluids auf und nehmen auf deren einander zugewandten Flächen Federelemente auf, welche wechselseitig zueinander versetzt angeordnet sind und Durchgangsöffnungen in einer axial dazwischenliegenden Scheibe abdecken und somit den Durchfluss des Hydraulikfluids in je einer Richtung sperren. In letzterer Scheibe ist zum Durchtritt des Hydraulikfluids weiterhin eine permanente Durchflussöffnung mit einem gegenüber den anderen Öffnungen reduziertem Durchmesser als Leckspalt angeordnet.

Das beschriebene Dämpfungsglied weist den entscheidenden Nachteil auf, dass durch den permanent offenen Leckspalt störende Druckpulsationen im hydraulischen System bis zum Kolben des Geberzylinders und auf das Kupplungspedal übertragen werden und sich dadurch keine entscheidende Komfortverbesserung für den Fahrer bemerkbar macht. Des Weiteren erfordert die Integration eines derartigen Dämpfungsliedes in ein bestehendes Betätigungssystem auch infolge der beträchtlichen Teileanzahl einen nicht unerheblichen Bauraum.

Die DE 23 55 254 A offenbart einen hydraulischen Teleskopstoßdämpfer mit einem Bodenventil. Das Bodenventil besteht aus einer Scheibe mit axialen Durchflußöffnungen für ein Hydraulikfluid, wobei an jeder Seite der Scheibe eine mit dieser mittels eines Niets verbundene und unter einer Vorspannung stehende Federscheibe so angeordnet ist, dass die Durchflußöffnungen wechselseitig an jeweils einer Seite für das Fluid offen und an der jeweils anderen Seite von der vorgespannten Federscheibe durch einen Anpressdruck dicht verschlossen sind. Die abgdeckten Öffnungen werden in Abhängigkeit von der Bewegung des Stoßdämpferkolbens und des dadurch erzeugten Hydraulikdruckes geöffnet oder geschlossen. Der in der Druckschrift beschriebene Teleskopstoßdämpfer ist nicht dazu ausgebildet bzw. geeignet, Druckpulsationen in einem hydraulischen System zum Betätigen einer Kraftfahrzeugkupplung zu dämpfen.

Von der DE 195 00 908 C1 ausgehend ist es daher die Aufgabe der Erfindung, ein Dämpfungsglied zur Dämpfung von Druckpulsationen in einem hydraulischen System zum Betätigen einer Kraftfahrzeugkupplung zu schaffen, welches hydraulische Schwingungen, die von der Verbrennungskraftmaschine eines Kraftfahrzeuges ausgehen, wirkungsvoll unterdrückt.

Die Aufgabe wird gelöst durch ein Dämpfungsglied mit den Merkmalen des Patentanspruchs 1. Vorteilhafte Weiterbildungen und Ausgestaltungen der Erfindung sind in den Unteransprüchen dargestellt.

Das in der vorliegenden Erfindung vorgeschlagene Dämpfungsglied beschreibt einen Kribbelfilter ähnlich einem Stoßdämpferbodenventil entweder in einem Geberzylinder bzw. Aktuator oder in einem Nehmerzylinder oder in einer dazwischen liegenden Hydraulikleitung in einem hydraulischen System zum Betätigen einer Kraftfahrzeugkupplung und umfasst axial fixierte Ventilelementen, nämlich Federscheiben, die sich abhängig von der hydraulischen Anströmung bzw. vom Hydraulikdruck elastisch verschwenken und so die vorgesehenen Durchströmquerschnitte zu- und abschalten. Die Wirkung des Kribbelfilters ist abstimmbar durch Variation der Federscheibenelastizität, z.B. Scheibendicke und Werkstoff, Anzahl der Federscheibenelemente, Vorspannung, Größe, Anzahl und Verlauf der Durchtrittsquerschnitte. Die Durchströmung in beide Richtungen kann unterschiedlich abgestimmt und optimiert werden. Das Kribbelfilter ist neben der Möglichkeit der Unterbringung in der Hydraulikleitung direkt in das Gehäuse in den Zylinderinnenraum des Geber- oder bevorzugt des Nehmerzylinders eingebaut und zwar sowohl im Anschlußbereich als auch im eigentlichen Zylinderinnenraum zwischen Zylinderboden und Kolben. Das Kribbelfilter, bzw. das Dämpfungsglied ist als zylindrisches bzw. scheibenförmiges Element in den Zylinderinnenraum eingeschoben und platzsparend in der Nähe des Zylinderbodens fixiert. Die Fixierung ist formschlüssig z. B. durch Einschnappen in die Bodenkontur oder durch Axialanschlag mittels Sprengring oder aber kraftschlüssig z. B. durch Fixierung mittels der in dem Zylinderinnenraum integrierten Feder oder durch Reibschluß oder Stoffschluß zwischen dem Dämpfungselement und der Zylinderwand des Zylinderinnenraums.

Schließlich kann durch die Wahl der Durchströmquerschnitte im Dämpfungsglied neben der Funktion als Kribbelfilter auch die Funktion als Betätigungsgeschwindigkeitsbegrenzer (Peak Torque Limiter) integriert werden, indem der Durchtrittsquerschnitt von der Kupplungsseite zur Pedalseite gezielt dimensioniert wird. Werden die Federscheiben nicht axial starr sondern mittels thermisch variabler Stützelemente, z. B. mittels Bimetallen oder Memory-Elementen fixiert, so kann die Funktion des Kribbelfilters und des Peak Torque Limiters auch noch thermisch variiert werden, um z.B. der im Tieftemperaturbereich sehr stark veränderten Viskosität des Hydraulikmediums zu entsprechen.

Ein Dämpfungsglied zum Einbau in hydraulische Verstelleinrichtungen wird in den anliegenden Zeichnungen dargestellt. Es zeigen:
- Fig. 1: einen Zylinder, insbesondere einen Nehmerzylinder mit einem Dämpfungsglied zum Einbau in den Zylinderinnenraum;
- Fig. 2: das Dämpfungsglied in der Nähe des Bodens des Zylinderinnenraums als Ausschnittsvergrößerung aus Fig. 1;
- Fig. 3: einen Zylinder mit einem Dämpfungsglied am Boden des Zylinderinnenraums als Abwandlung aus Fig. 1;
- Fig. 4: das Dämpfungsglied als Ausschnittsvergrößerung aus Fig. 3.

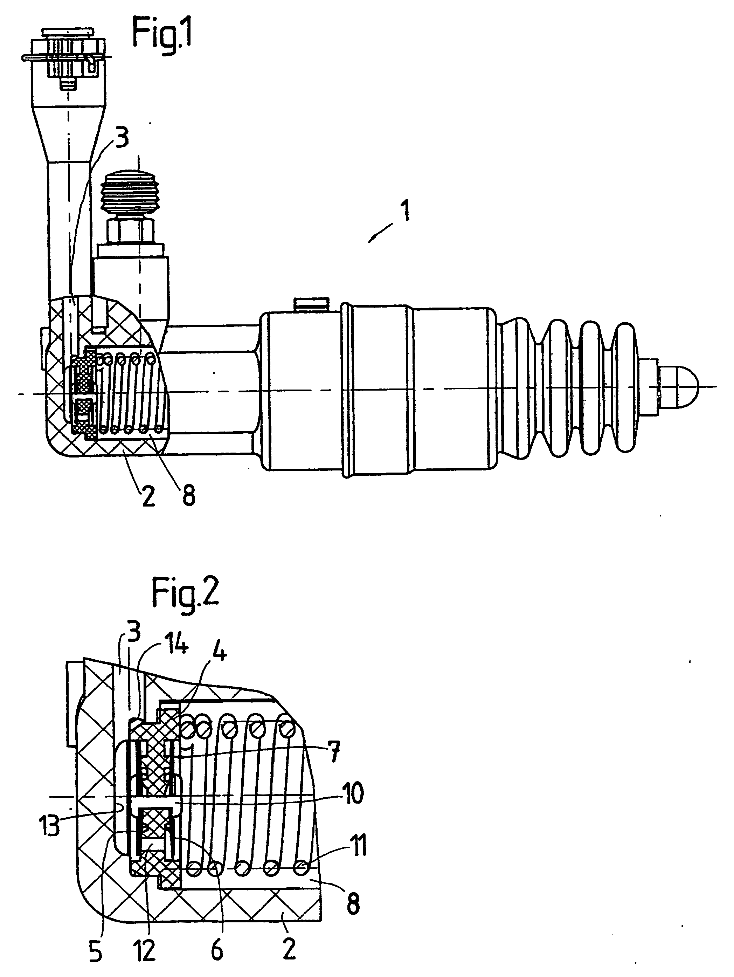

Wird mit 1 ein Zylinder einer hydraulischen Verstelleinrichtung für Kraftfahrzeugkupplungen bezeichnet, so besteht dieser Zylinder gemäß Fig. 1 aus einem Gehäuse 2, einer Hydraulikleitung 3 und einem Zylinderinnenraum 8 und einer Feder 11 zur Befestigung eines Dämpfungsglieds 7 nahe an einem Boden 13 des Zylinderinnenraums 8. Das Dämpfungsglied 7 besteht aus einer Scheibe 4, einer ersten Federscheibe 5 und einer zweiten Federscheibe 6, wobei die Federscheiben 5 und 6 mit der Scheibe 4 durch einen Niet 10 verbunden sind. Die Scheibe 4 weist Durchlaßöffnungen 12 auf, die wechselseitig einmal von der ersten Federscheibe 5 und einmal von der zweiten Federscheibe 6 abgedeckt werden, wobei die Anlageflächen auf der Scheibe 4 für die Federscheiben 5 und 6 eine konische Form aufweisen, wodurch bei Vernietung der Federscheiben 5 und 6 mit der Scheibe 4 die Durchlaßöffnungen 12 unter Vorspannung abgedeckt werden.

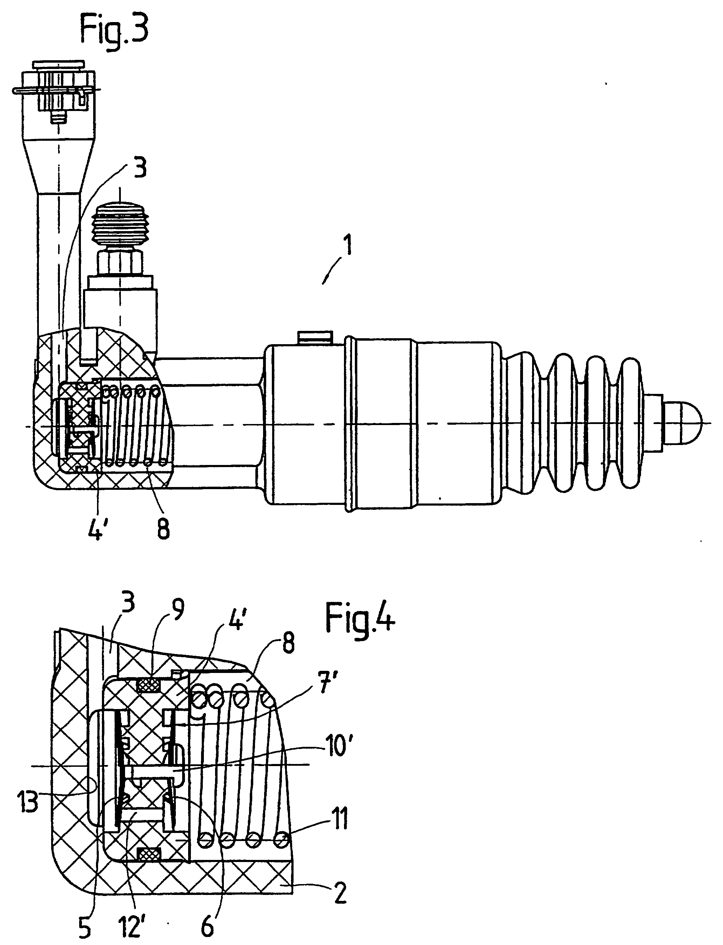

Gemäß Fig. 3 ist ein Zylinder 1 dargestellt, in dessen Innenraum 8 ein Dämpfungsglied 7' mit einer Dichtung 9 angeordnet ist, das in der Nähe des Bodens 13 fixiert ist und Federscheiben 5 und 6 aufweist, die durch einen Niet 10' mit der Scheibe 4' verbunden sind. Die Scheibe 4' weist Öffnungen 12' auf, die auf jeweils einer Seite von einer der beiden Federscheiben 5 oder 6 unter Vorspannung abgedeckt werden.

Für den Fall, daß es sich bei dem dargestellten Zylinder 1 um einen Nehmerzylinder in der hydraulischen Verstelleinrichtung handelt, wird bei Betätigung eines Betätigungspedals das Fluid durch die Hydraulikleitung 3 gegen das Dämpfungsglied 7, 7' gepreßt, wodurch das Fluid in solche Durchlaßöffnungen 12, 12' eindringen kann, die von der ersten Federscheibe 5 nicht abgedeckt werden. Die besagten Durchtrittsöffnungen 12,12' werden jedoch von der unter Vorspannung stehenden zweiten Federscheibe 6 abgedeckt, wobei erst ab einem gewissen Druck die zweite Federscheibe 6 von der entsprechenden Durchlaßöffnung 12,12' abgehoben wird, wodurch der Weg für das Fluid frei wird zum Eintritt in den Zylinderinnenraum 8 des Zylinders 1. Wird das Betätigungspedal jedoch freigegeben, so wird der Kolben des Zylinders 1 von der Membranfeder der Kupplung zurückgeschoben und das Fluid passiert die Scheibe 4 durch die Durchlaßöffnungen 12,12', die von der zweiten Federscheibe 6 nicht abgedeckt sind. Das durchströmende Fluid öffnet die unter Vorspannung stehende erste Federscheibe 5, wodurch das Fluid aus dem Zylinderinnenraum 8 in die Hydraulikleitung 3 zurückfließen kann. In beiden Durchströmrichtungen muß, wie eben beschrieben, ein Anfangsdruck überwunden werden, der jeweils durch die Anpreßkraft einer der beiden Federscheiben 5 oder 6 aufgebaut wird, wobei die beiden Federscheiben 5 und 6 die ihnen zugeordneten Durchlaßöffnungen 12,12' so lange dicht verschließen, bis sie von dem Fluid durch Betätigung des Betätigungspedals jeweils in ihrer Richtung geöffnet werden.

Als Kribbelfilter wirkt das Dämpfungsglied 7,7' in einer der beiden Ruhestellungen des Systems, also bei eingerückter oder ausgerückter Kupplung so lange, wie das in der Hydraulikleitung 3 schwingende Fluid die jeweiligen Federscheiben 5 oder 6 in den ihnen zugeordneten Durchflußrichtung nicht öffnen kann.

Die von der ersten Federscheibe 5 abgedeckten Durchlaßöffnungen 12,12' können einen anderen Gesamtquerschnitt haben, als die von der zweiten Federscheibe 6 abgedeckten Durchlaßöffnungen 12,12'. Bei der Unterbringung des Dämpfungsgliedes 7,7' insbesondere im Nehmerzylinder begrenzen die von der ersten Federscheibe 5 abgedeckten Durchlaßöffnungen 12,12' die Strömgeschwindigkeit des Fluids vom Zylinderinnenraum 8 in die Hydraulikleitung 3, wodurch die Membranfeder der Kupplung bei schlagartigem Loslassen des Betätigungspedals sich nur in einer maximal möglichen Geschwindigkeit in die Ruhelage zurückbewegen kann. Die Auslegung der Durchlaßöffungen 12,12' hat somit einen direkten Einfluß auf die Funktion der Verstelleinrichtung im Kraftfahrzeug, wodurch fehlerhafte Bedienungen durch den Fahrer korrigierbar sind. Es handelt sich also um eine Betätigungsgeschwindigkeitsbegrenzung, die beim Einrücken der Kupplung unangenehme Stöße beim Anfahren oder während der Fahrt des Fahrzeuges verhindert. Umgekehrt aber ist es auch möglich, die Durchlaßöffungen 12,12' in Richtung Betätigung bzw. Ausrücken der Kupplung so zu dimensionieren, daß eine gewisse Betätigungsgeschwindigkeit nicht überschritten werden kann. Auch diese Maßnahme führt zur Vermeidung von ungewollten Geschwindigkeitsänderungen des Fahrzeuges während der Fahrt.

Als Ort für die Unterbringung des Kribbelfilters kann das Gehäuse des Geberzylinders bzw. Aktuators, die Hydraulikleitung 3 oder aber, wie beschrieben, das Gehäuse 2 des Nehmerzylinders sein. Beim Einbau des Kribbelfilters und somit des Dämpfungsgliedes in die Hydraulikleitung 3 ist es erforderlich, ein separates Gehäuse ausschließlich für das Dämpfungsglied einzubauen. Eine solche Lösung kommt nur im Fall von Nachrüstung oder bei Sonderfällen in Frage, die hier aus Gründen der Vollständigkeit erwähnt werden sollen. Als günstiger Ort der Anordnung des Dämpfungsgliedes hat sich ein Ort nahe an der Entstehung der Schwingungen erwiesen, nämlich im oder am Zylinder 1 des Nehmerzylinders.

Die erste Federscheibe 5 und/oder die zweite Federscheibe 6 können als Federscheibenpaket aus mehreren übereinander liegenden Federscheiben ausgeführt sein, wobei dem Federscheibenpaket beispielsweise Federscheiben aus Kunststoff beigelegt sein können, um die Dicht- und Dämpfwirkung gegenüber dem die Durchlaßöffnungen durchströmenden Fluid zu verbessern. Die Federscheiben des Federscheibenpaketes können sich untereinander in der Blechdicke und in der Außenform unterscheiden, wobei auch mindestens zwei Federscheiben miteinander verklebt sein können.

Die erste Federscheibe 5 und/oder die zweite Federscheibe 6 können mit der Scheibe 4,4' durch ein thermisch variables Stützelement, z. B. eines Bimetalles oder eines Memory-Elementes fixiert sein, was den Vorteil ergibt, daß die Drosselwirkung in der hydraulischen Verstelleinrichtung für einmal die Unterdrückung von lästigen Schwingungen und einmal für alle Umgebungstemperaturen konstant gehalten werden kann.

Ferner kann das Bimetall- oder Memory-Element die Ventilcharakteristik der Federscheiben 5 und/oder 6 bei Unterschreiten einer bestimmten Grenztemperatur in der Weise verändern, daß sie der mit der Temperaturabnahme entsprechend zunehmenden Viskosität des Fluids entgegenwirkt.

## Patentansprüche

1. Dämpfungsglied eines hydraulischen Systems zum Betätigen einer Kraftfahrzeugkupplung, welches einen Geberzylinder und einen mit diesem durch eine mit einem Fluid gefüllte Hydraulikleitung in Verbindung stehenden Nehmerzylinder umfasst, wobei, zur Dämpfung von Druckpulsationen,
das Dämpfungsglied (7,7') ein Gehäuse (2) und eine darin angeordnete Scheibe (4,4') mit axialen Durchflußöffnungen (12,12') für das Fluid umfasst, wobei an jeder Seite der Scheibe (4,4') zumindest eine mit dieser verbundene und unter einer Vorspannung stehende Federscheibe (5,6) angeordnet ist, **dadurch gekennzeichnet, dass** alle Durchflußöffnungen (12,12') wechselseitig an jeweils einer Seite für das Fluid offen und an der jeweils anderen Seite von der vorgespannten Federscheibe (5,6) durch einen Anpressdruck dicht verschlossen sind, solange ein infolge einer Druckpulsation oder infolge einer Kupplungsbetätigung auf die Federscheiben (5,6) erzeugter hydraulischer Gegendruck deren Anpressdruck nicht übersteigt.

2. Dämpfungsglied nach Anspruch 1,
**dadurch gekennzeichnet,**
**dass** die Scheibe (4,4') mit den Federscheiben (5,6) zu einer vormontierten Einheit verbunden ist.

3. Dämpfungsglied nach Anspruche 1 oder 2,
**dadurch gekennzeichnet,**
**dass** die Flächen für die Anlage der Federscheiben (5,6) auf der Scheibe (4,4') konisch ausgeführt sind und dass die Federscheiben (5,6) mittels eines Niets (10,10') mit der Scheibe (4,4') verbunden sind.

4. Dämpfungsglied nach einem der Ansprüche 1 bis 3,
**dadurch gekennzeichnet,**
**dass** das Gehäuse (2) ein Gehäuse eines Geber- oder Nehmerzylinders darstellt.

5. Dämpfungsglied nach einem der Ansprüche 1 bis 4,
**dadurch gekennzeichnet,**
**dass** die Scheibe (4,4') durch ein Vorspannelement (11) in ihrer Position am Gehäuse (2) des Dämpfungsgliedes gehalten wird.

6. Dämpfungsglied nach einem der Ansprüche 1 bis 5,
**dadurch gekennzeichnet,**
**dass** die Scheibe (4) mittels einer Schnappvorrichtung (14) formschlüssig in ihrer axialen Position im Gehäuse (2) gehalten wird.

7. Dämpfungsglied nach einem der Ansprüche 1 bis 6,
**dadurch gekennzeichnet,**
**dass** die Durchlaßöffnungen (12,12') im Querschnitt so bemessen sind, dass sie während des Einkuppelns auf das in Richtung Geberzylinder strömende Fluid eine Drosselwirkung in der Weise ausüben, dass eine maximal zulässige Einrückgeschwindigkeit der Kupplung nicht überschritten wird.

8. Dämpfungsglied nach einem der Ansprüche 1 bis 7,
**dadurch gekennzeichnet,**
**dass** die Durchlaßöffnungen (12,12') im Querschnitt so bemessen sind, dass sie während einer Betätigung eine Drosselwirkung auf das in Richtung Nehmerzylinder strömende Fluid in der Weise ausüben, dass eine minimal zulässige Betätigungsgeschwindigkeit zum Ausrücken der Kupplung nicht unterschritten werden kann.

9. Dämpfungsglied nach einem der vorhergehenden Ansprüche,
**dadurch gekennzeichnet,**
**dass** der Anpreßdruck mindestens einer der beiden Federscheiben (5,6) in Abhängigkeit von der Umgebungstemperatur eingestellt werden kann, wobei die Federscheiben (5,6) jeweils mittels eines thermisch variablen Stützelementes, zum Beispiel eines Bimetalles oder eines Memory-Elementes, an der Scheibe (4,4') fixiert sind.

10. Dämpfungsglied nach Anspruch 9,
**dadurch gekennzeichnet,**
**daß** ein thermisch variables Element, z.B. ein Bimetall- oder ein Memory-Element, die Ventilcharakteristik bei Unterschreiten einer definierten Grenztemperatur verändern und somit einer zunehmenden Viskosität des Fluids entgegenwirken kann.

## Claims

1. Damping member of a hydraulic system for actuating a motor-vehicle clutch which comprises a master cylinder and a slave cylinder which is connected to the former via a hydraulic line filled with a fluid, the damping member (7, 7'), in order to damp pressure pulses, comprising a casing (2) and a disc (4, 4') arranged therein with axial through-flow openings (12, 12') for the fluid, at least one disc spring (5, 6) which is connected to the disc (4, 4') and is under prestress being arranged on each side of the said disc (4, 4'), **characterized in that** all the through-flow openings (12, 12') are alternately open for the fluid on one respective side and closed tightly via a contact pressure on the respective other side by the prestressed disc spring (5, 6), as long as a hydraulic counterpressure produced on the disc springs (5, 6) as a result of a pressure pulse or as a result of clutch actuation does not exceed their contact pressure.

2. Damping member according to Claim 1, **characterized in that** the disc (4, 4') is connected to the disc springs (5, 6) to form a preassembled unit.

3. Damping member according to Claim 1 or 2, **characterized in that** the surfaces on the disc (4, 4') for the contact of the disc springs (5, 6) are of conical design, and **in that** the disc springs (5, 6) are connected to the disc (4, 4') by means of a rivet (10, 10').

4. Damping member according to one of Claims 1 to 3, **characterized in that** the casing (2) is a casing of a master or slave cylinder.

5. Damping member according to one of Claims 1 to 4, **characterized in that** the disc (4, 4') is held in its position on the casing (2) of the damping member by a prestressing element (11).

6. Damping member according to one of Claims 1 to 5, **characterized in that** the disc (4) is held with a form-fitting connection in its axial position in the casing (2) by means of a snap-action apparatus (14).

7. Damping member according to one of Claims 1 to 6, **characterized in that** the cross section of the passage openings (12, 12') is dimensioned in such a way that the said passage openings (12, 12') exert a throttling action on the fluid flowing in the direction of the master cylinder during clutch engagement, such that a maximum permissible clutch engagement speed is not exceeded.

8. Damping member according to one of Claims 1 to 7, **characterized in that** the cross section of the passage openings (12, 12') is dimensioned in such a way that the said passage openings (12, 12') exert a throttling action on the fluid flowing in the direction of the slave cylinder during actuation, such that a minimum permissible actuation speed for disengaging the clutch cannot be undershot.

9. Damping member according to one of the preceding claims, **characterized in that** the contact pressure of at least one of the two disc springs (5, 6) can be set as a function of the ambient temperature, the disc springs (5, 6) each being fixed to the disc (4, 4') by means of a thermally variable supporting element, for example a bimetal or a memory element.

10. Damping member according to Claim 9, **characterized in that** a thermally variable element, for example a bimetallic element or a memory element, can change the valve characteristics when a defined limit temperature is undershot and can thus counteract the increasing viscosity of the fluid.

## Revendications

1. Elément amortisseur d'un système hydraulique destiné à actionner l'embrayage d'un véhicule automobile, qui comprend un cylindre émetteur et un cylindre récepteur qui est relié à celui-ci au moyen d'un conduit hydraulique rempli d'un fluide, l'élément amortisseur (7, 7') qui sert à amortir des pulsations de pression comprenant un boîtier (2) dans lequel est agencé un disque (4, 4') qui comprend des ouvertures axiales d'écoulement (12, 12') pour le fluide et sur chacun de ses côtés au moins une rondelle élastique (5, 6) reliée au disque (4, 4') et soumise à une précontrainte, **caractérisé en ce que** toutes les ouvertures d'écoulement (12, 12') sont ouvertes pour le fluide en alternance sur un des côtés de la rondelle élastique (5, 6) précontrainte tandis qu'elles sont fermées sur l'autre côté au moyen d'une pression d'appui tant que la contre-pression créée sur les rondelles élastiques (5, 6) par une pulsation de pression ou par la mise en fonctionnement de l'embrayage ne dépasse pas la pression d'appui.

2. Elément amortisseur selon la revendication 1, **caractérisé en ce que** le disque (4, 4') est relié aux rondelles élastiques (5, 6) pour former une unité pré-montée.

3. Elément mortisseur selon la revendication 1 ou 2, **caractérisé en ce que** les surfaces destinées à l'installation des rondelles élastiques (5, 6) sur le disque (4, 4') sont coniques et **en ce que** les rondelles élastiques (5, 6) sont reliées au disque (4, 4') au moyen d'une agrafe (10, 10').

4. Elément amortisseur selon l'une des revendications 1 à 3, **caractérisé en ce que** le boîtier (2) est le boîtier d'un cylindre émetteur ou d'un cylindre récepteur.

5. Elément amortisseur selon l'une des revendications 1 à 4, **caractérisé en ce que** le disque (4, 4') est maintenu dans sa position sur le boîtier (2) de l'élément amortisseur au moyen d'un élément de précontrainte (11).

6. Elément amortisseur selon l'une des revendications 1 à 5, **caractérisé en ce que** le disque (4) est maintenu en correspondance de forme dans sa position axiale dans le boîtier (2) au moyen d'un dispositif (14) à encliquetage.

7. Elément amortisseur selon l'une des revendications 1 à 6, **caractérisé en ce que** la section transversale des ouvertures d'admission (12, 12') est dimensionnée de telle façon que lors de l'embrayage, elles exercent un effet d'étranglement sur le fluide qui s'écoule en direction du cylindre émetteur de telle sorte que l'on ne dépasse pas une vitesse maximale admissible d'accouplement de l'embrayage.

8. Elément amortisseur selon l'une des revendications 1 à 7, **caractérisé en ce que** la section transversale des ouvertures d'admission (12, 12') est dimensionnée de telle façon que lors de l'actionnement, elles exercent un effet d'étranglement sur le fluide qui s'écoule en direction du cylindre récepteur de telle sorte que l'on ne se trouve pas en-dessous d'une vitesse d'actionnement minimale admissible de désaccouplement de l'embrayage.

9. Elément amortisseur selon l'une des revendications précédentes, **caractérisé en ce que** la pression d'appui d'au moins l'une des deux rondelles élastiques (5, 6) peut être réglée en fonction de la température ambiante, chacune des rondelles élastiques (5, 6) étant fixée sur le disque (4, 4') au moyen d'un élément d'appui thermiquement variable, par exemple un bimétal ou un élément à mémoire de forme.

10. Elément amortisseur selon la revendication 9, **caractérisé en ce qu'**un élément thermiquement variable, par exemple un élément bimétallique ou un élément à mémoire de forme, peut modifier les caractéristiques d'admission lorsqu'on se trouve en dessous d'une température de seuil définie et contrecarrer ainsi l'accroissement de la viscosité du fluide.
